Europäisches Patentamt

(19) European Patent Office

Office européen des brevets

(11) Publication number: **0 084 450 B2**

# NEW EUROPEAN PATENT SPECIFICATION

(12)

(45) Date of publication of the new patent specification : **02.05.91 Bulletin 91/18**

(21) Application number : **83300219.9**

(22) Date of filing : **17.01.83**

(51) Int. Cl.⁵ : **B29C 47/16**

(54) Thermoplastic film extruding T-die.

(30) Priority : **20.01.82 JP 7362/82**

(43) Date of publication of application :
**27.07.83 Bulletin 83/30**

(45) Publication of the grant of the patent :
**28.05.86 Bulletin 86/22**

(45) Mention of the opposition decision :
**02.05.91 Bulletin 91/18**

(84) Designated Contracting States :
**BE CH DE FR GB IT LI NL SE**

(56) References cited :
**DE-U- 1 979 334**
**US-A- 3 018 815**
**US-A- 4 248 579**

(73) Proprietor : **TETRA PAK INTERNATIONAL AB**
**Fack 1701**
**S-221 01 Lund 1 (SE)**

(72) Inventor : **Otsuka, Yuzo**
**883-28, Niihashi**
**Gotenba-shi (JP)**
Inventor : **Yamazaki, Takeo**
**1404-1, Niihashi**
**Gotenba-shi (JP)**

(74) Representative : **Williams, Trevor John et al**
**J.A. KEMP & CO. 14 South Square Gray's Inn**
**London WC1R 5EU (GB)**

## Description

The present invention relates to T-dies for extruding thermoplastic films for use in thermoplastic film producing equipment or laminating equipment, and more particularly to a so-called T-die of the type having a manifold formed therein and adapted to be supplied with molten resin at its center.

T-dies for extruding thermoplastic films are conventionally known. However, such conventional T-dies offer such a disadvantage that molten resin extruded from a die slit of the conventional T-die to the atmosphere presents a neck-in phenomenon, whereby the molten resin shrinks inwardly in the widthwise direction thereof, so that edge bead portions larger in thickness than the central portion of a film are formed at opposite side edges of the film. These edge bead portions, being unusable as portions of a product, are cut away by means of a cutter or the like and waste-treated by means of a bead winder. As a consequence, the quantity of resin corresponding to the edge bead portions is entirely turned into a loss, whereby the raw material of resin is excessively consumed, thereby increasing the cost for the raw material. Additionally, in a lamination equipment in which a film extruded from an extruding metal die is directly laminated onto paper, cellophane or the like, the film has to be extruded so as to have a width larger by an amount corresponding to the edge bead portions than the width of a substrate such as paper, cellophane or the like. After the extruded film is adhered onto the substrate, the edge bead portions are cut away by means of a cutter or the like. Thus, at the time when the substrate is pressed against the extruded film by a press roll, the edge bead portions are brought into direct contact with the pressure roll. In general, the pressure roll is a rubber covered roll, to which the molten resin is easily adhered. To prevent the extruded resin from adhering to the pressure roll, it must be covered therearound with a heat-resistant non-adhesiver tape. Since this non-adhesive tape cannot secure a satisfactory service life against the operation for a long period of time, it is necessary to frequently replace it with new one, thus extremely deteriorating the operating efficiency. Further, such an adverse effect is rendered that chips generated at the time of cutting the edge bead portions of the film, are adhered to a product. Furthermore, the cutter, being encountered with a serious wear against the use for a long period of time, is required to be frequently replaced. As described above, the conventional extruding metal die inevitably produces thick edge bead portions at the opposite ends of the film extruded, whereby considerable disadvantages have been given in the production of the film or the lamination.

The present invention has been developed to obviate the above-described disadvantages of the prior art and has as its object the provision of a T-die wherein the edge bead portions at the opposite ends of the film extruded are prevented from being formed, thereby to extrude a film having a uniform thickness in the widthwise direction thereof.

In U.S.-A-4248579 there is disclosed a T-die for extruding a thermoplastic film, said die comprising : a main body ; a manifold defined in said body and extending in the widthwise direction of said film to be extruded ; a die slit also extending in the widthwise direction of said film and communicating with said manifold so that molten resin fed to said manifold is discharged through said die slit ; and deckle plugs each fitted in the respective end portions of said manifold and having at the inner end thereof a guide surface for guiding said molten resin so that the latter has a component of flow outwardly in the widthwise direction as it flows in the manifold to said die slit.

As a result of study for preventing the edge bead portions at the opposite ends of the film extruded by the T-die from being formed, it has been found that the formation of the edge bead portions can be prevented by regulating the following directions of the molten resin at opposite end portions of a manifold and die slit in the T-die. More specifically, it has been found that the formation of the edge bead portions can be prevented and a film which can be fully used across its entire width obtained by guiding the molten resin at opposite ends of the T-die so that the molten resin flows gradually outwardly in the widthwise direction of the T-die throughout both the manifold and the die slit.

The present invention is characterised in that each said deckle plug (6) extends into said die slit (5) with a cross-sectional shape substantially corresponding with that of the manifold (2) and the slit (5) so as to fit into said manifold and die slit for blocking said molten resin from flowing along such end portions of the manifold, each deckle plug being provided on its outer face with a deckle packing (8) to prevent molten resins from flowing between the deckle plug and the manifold wall and having its guide surface straight and and inclined outwardly in the widthwise direction in the die slit as well as in the manifold at an angle of 25° to 37° to the direction of extrusion, the guide surface extending to the point of exit or resin from the slit.

By the deckle plugs having shapes which block end portions of the manifold and die slit and which are each provided at the inner end thereof with a guide surface for guiding molten resin outwardly widthwise of the slit until the resin leaves the slit, a film can be obtained free from blemishes at its edge with consequent saving in material and with no need to remove the film edges before use. The provision of the straight die surface right down to the point of exit from the die slit provides for smooth flow of resin material in the manifold and die slit with a widthwise outwardly component of flow in order to achieve the benefits of the invention.

Description will hereunder be detailed in a preferred embodiment of the present invention as shown in the accompanying drawings.

Fig. 1 is a sectional view showing the end portion of one embodiment of the T-die according to the present invention ;

Fig. 2 is a sectional view taken along the line II-II in Fig. 1 ;

Fig. 3 is a sectional view showing the conditions of the film formation by the conventional T-die ;

Fig. 4 is a sectional view showing the conditions of the film formation by the T-die according to the present invention ;

Fig. 5 is a sectional view enlargedly showing a portion of Fig. 4 ;

Fig. 6 is an explanatory view showing the arrangement of the laminater system ; and

Fig. 7 is an enlarged view showing the side edge portion of the test sample laminated by the laminater system shown in Fig. 6.

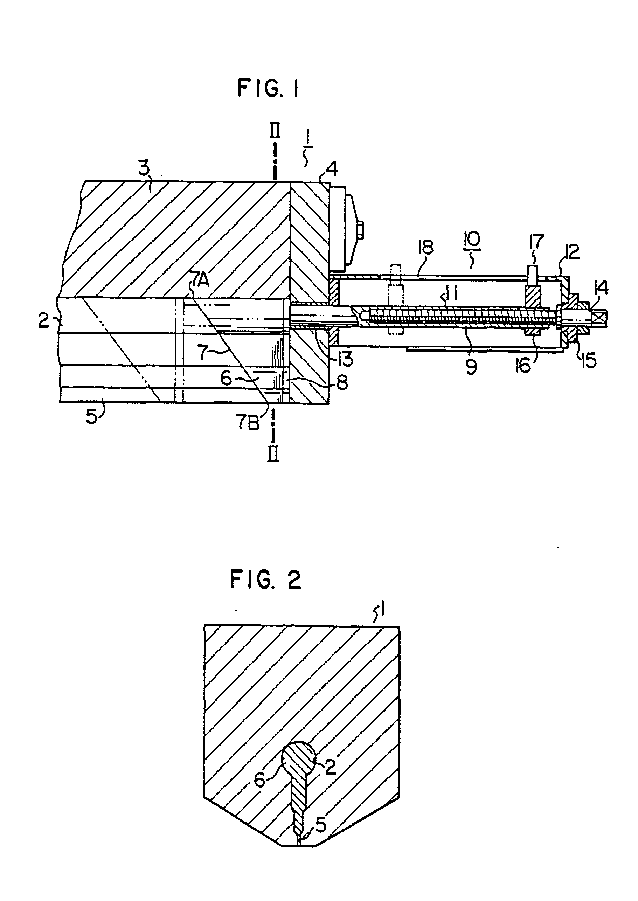

Referring to Figs. 1 and 2, generally designated at reference numeral 1 is a T-die which includes a main body 3 formed therein with a manifold 2, and side plates 4 for blocking end portions of the manifold 2. The manifold 2 having the substantially uniform vertically cross section extends in the longitudinal direction of the T-die and is communicated to a die slit 5 formed therealong and defined by a pair of lands. The arrangement described above is well-known.

The present invention features that deckle plugs 6 of integral construction are inserted into the manifold and die slit at end portions of the well-known T-die. As apparently shown in Fig. 2, each deckle plug 6 has a shape of substantially blocking the manifold 2 and the die slit 5 in each end thereof and is provided at its inner end with a guide surface 7 for guiding molten resin. The guide surface 7 is inclined so as to guide the molten resin gradually outwardly in the widthwise direction of a film from a point 7A at the inner-most portion of the manifold 2 to a point 7B at an outlet of the die slit 5. In the embodiment illustrated, the guide surface 7 is straight-lined as seen in Fig. 1.

The deckle plug 6 is made of a soft metal such as brass and a gap of about 0.05 mm is formed between the deckle plug 6 and the inner peripheral surface of the manifold 2, so that the deckle plug 6 can move in the longitudinal direction of the manifold 2. To prevent the molten resin from flowing through the gap between the outer peripheral surface of the deckle plug 6 and the inner peripheral surface of the manifold 2, a deckle packing 8 is solidly secured to the outer end of the deckle plug 6. The deckle packing 8 has a shape of completely blocking the gap between the deckle plug 6 and made of heat-resistant resin such for example as special fluorine plastics.

A position adjusting device 10 for moving the deckle plug 6 is secured to the outer surface of the side plate 4. The adjusting device 10 comprises a slide shaft 11 secured to the deckle plug 6 and supported by the side plate 4 through a bearing 13, a support frame 12 rigidly secured to the side plate 4, an adjusting screw 14 having external threads engaging with internal threads of the slide shaft 11, and a bush 15 for rotatably supporting the adjusting screw 14. Thus, rotation of the adjusting screw 14 moves the slide shaft to adjust the widthwise position of the deckle plug 6. Further, to make it possible to visually inspect the position and the amount of movement of the deckle plug in the T-die, a ring 16 and a guide pin 17 are secured to the slide shaft 11. The guide pin 17 projects to outside through a slot 18 formed on the upper surface of the support frame 12, and a graduation, not shown, for indicating the position of the guide pin 17 is provided by the slot 18.

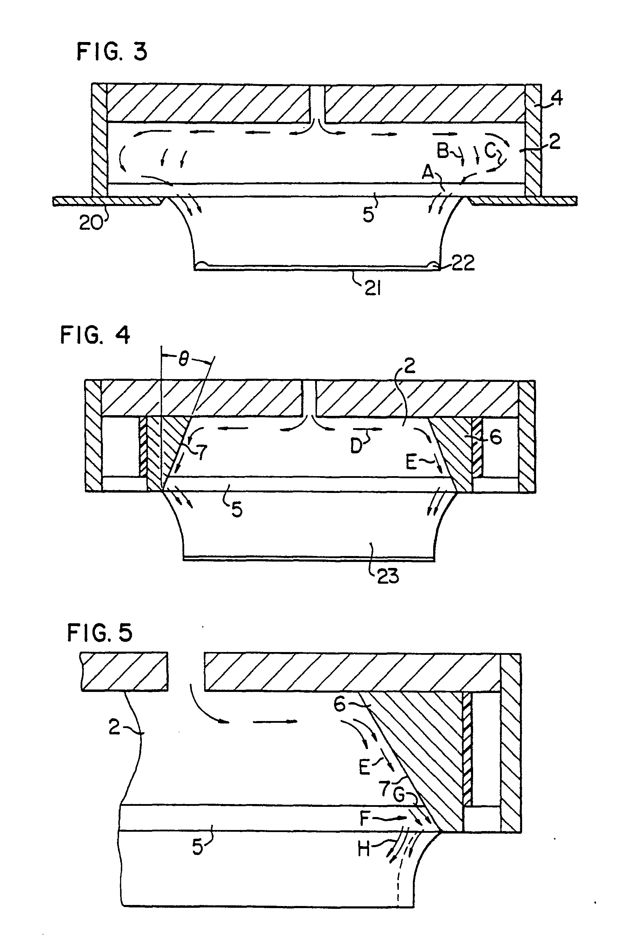

Description will now be made to the formation of the film by means of the T-die having the above-described arrangement, in comparison with the conventional T-die. Fig. 3 shows the typical T-die of the prior art, in which outer deckles 20 for regulating a discharge width are mounted outside the die slit 5. The flows of the molten resin as indicated by arrows are considered to be occurred in the T-die of the above-described arrangement. The molten resin extruded from the die slit 5 is formed into a film 21, shrinking in the widthwise direction thereof, due to a neck-in phenomenon. Thus, the film 21 formed has edge bead portions 22 at opposite side edges thereof. Usually, the edge bead portion is more than three times larger in thickness than the other portion. The reason why the edge bead portions are formed is considered as such that the widthwise shrinkage of the discharged film at the end portions thereof is larger in value than that at the central portion thereof and the discharged volumes of the molten resin at the end portions A of the die slit 5 are larger than the discharged volume of the molten resin at the central portion. In addition, even if the outer deckles 20 are retracted with the forward ends thereof being coincided with the inner surfaces of the side plates 4, the edge bead portions are still formed.

On the contrary, in the T-die according to the present invention, as shown in Fig. 4, the deckle plugs 6 each having an inclined guide surface 7 are inserted into the manifold 2 and die slit 5, and hence, the molten resin discharged from the opposite ends of the slit is considered to flow as indicated by arrows D and E in the manifold 2. The molten resin discharged from the land of this T-die immediately shrinks in the widthwise direction due to the neck-in phenomenon, but the film 23 thus formed has a thickness uniform in the widthwise direction, and has substantially no edge bead portions 22 as seen with the conventional die. The reason for this is not accurately known, but the following may form the reason. The manifold 2 above the end portions F of the die slit 2 is blocked by the deckle plugs 6 as shown in Fig. 5, whereby the vertical sectional area of the manifold 2 is decreased gradually outwardly in the widthwise direction of the film. As a consequence, the flowing resistances to the resin flowing at the end portions F are larger that in the center portion, whereby the flow rates of the resin in the end portions F are lower than the flow rate to the central portion. Further, at the end portion F of the die slit, the flow is divided into two including a flow G flowing along the guide surface 7 and a flow H being returned to the direction of the center due to the neck-in phenomenon of the film, whereby the flow rate of the resin discharged from the end portions F of the die slit 5 becomes very low. As a result, even if the film discharged presents the neck-in phenomenon and the side edge portions of the film shrinks in the widthwise direction in value larger than the central portion, the thickness of the film finally formed becomes substantially constant.

As described above, according to the present invention, only the insertion of the deckle plugs each having a guide surface for guiding the flow of the molten resin obliquely outwardly, into the end portions of the manifold and die slit of the T-die makes it possible to easily form a film having a substantially uniform thickness. By this arrangement, necessity for cutting and removing the edge bead portions formed at the side edge portions of the film as in the prior art can be eliminated, the whole width of the film is available as a product, and various disadvantages which have been encountered by the formation of the edge bead portions can be obviated. Further, the deckle plug has a function of regulating the width of the film extruded, thereby to eliminate necessity for using the outer deckles 20 in the prior art (Refer to Fig. 3).

In the above-described embodiment, there is provided the position adjusting device 10 for adjusting the position of the deckle plug 6 from outside of the die in the assembled state of the die. The position adjusting device 10 may be dispensed with.

Example

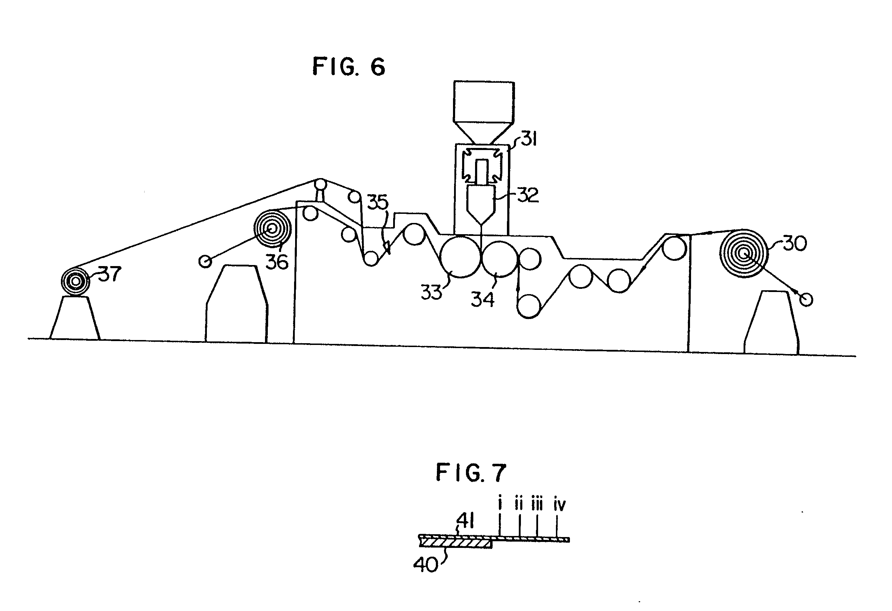

The following is the results of operation of a laminater system using the T-die shown in Figs. 3 and 4. As shown in Fig. 6, the laminater system used comprises a winding-off device 30, an extruder 31, a T-die 32, a chill roll 33, a pressure roll 34, a cutter 35 for cutting edge bead portions, a winder 36, a winder 37 for winding edge bead portions and the like.

Specification of laminater system

| | |
|---|---|
| Chill roll : | 760 $\phi$mm |
| Pressure roll : | 200 $\phi$mm |
| Roll width : | 1800 mm |
| Winding-off device Unwinder : | Two-shaft turrer type |
| Winder : | Pop reel type surface winder |
| Extruder : | Diameter : 150 $\phi$mm, L/D : 28 |
| T-die : | Width of 1800 mm |
| | Lip interval 0.5 mm |
| Resin used : | L-705 Sumikasen (Product of Sumitomo Chemical Co., Ltd.) |
| Substrate : | Craft paper of 260 g/m$^2$ |

Specification of Deckle plug
Material quality $B_S B_M$
Inclination of the guide surface (indicated by $\theta$ in Fig. 4) : 37° and 25°

Conditions of formation

| | |
|---|---|
| Takeup speed : | 240 m/min |
| Coating quantity : | 24 g/m$^2$ |
| Extruding quantity : | 463 Kg/HR |
| Temperature of resin : | 280°C |

Under the above-described conditions, lamination was effected in such a manner that the film 41 had a width at one side by 20 mm larger than the width of the substrate 40 as shown in Fig. 7. Thicknesses of selvedges of the film were measured at four points (i, ii, iii and iv). Table 1 shows the results of the measurement.

## EP 0 084 450 B2

### TABLE 1

(Unit: mm)

| Point of measurement | Test I | | Test II | |
|---|---|---|---|---|
| | Die of prior art (Fig. 3) | Die of the invention (Fig. 4 θ=37°) | Die of prior art (Fig. 3) | Die of the invention (Fig. 4 θ=25°) |
| i | 0.025 | 0.024 | 0.026 | 0.025 |
| ii | 0.050 | 0.026 | 0.050 | 0.028 |
| iii | 0.090 | 0.030 | 0.110 | 0.022 |
| iv | 0.080 | 0.028 | 0.095 | 0.040 |
| Average of Bead Portion | 0.073 | 0.028 | 0.085 | 0.033 |

Note:
Since the thicknesses at the Point i) are substantially equal to the required coating thickness, the "Average of Bead Portion" is the average of thicknesses of Points ii, iii and iv.

As apparent from Table 1, when the die of the prior art was used, the average thickness of the selvedge was 0.073 or 0.085 mm, which was about 2.8 times the required coating thickness (the coating thickness at the central portion) of 0.026 mm. In contrast thereto, when the die, into which the deckle plugs 6 were inserted, was used, the thickness of the film selvedges in average value was 0.028 or 0.033 mm, which was fully within the tolerance scope of the product. As a consequence, necessity for putting the film selvedges outwardly of the width of the base was eliminated.

### Claims

1. "A T-die for extruding a thermoplastic film, said die comprising : main body (3) ; a manifold (2) defined in said body and extending in the widthwise direction of said film to be extruded ; a die slit (also extending in the widthwise direction of said film and communicating with said manifold (2) so that molten resin fed to said manifold is discharged through said die slit (5) ; and deckle plugs (6) each fitted in the respective end portions of said manifold and having at the inner end thereof a guide surface (7) for guiding said molten resin so that the latter has a component of flow outwardly in the widthwise direction as it flows in the manifold to said die slit, characterised in that each said deckle plug (6) extends into said die slit (5) with a cross-sectional shape substantially corresponding with that of the manifold (2) and the slit (5) so as to fit into said manifold and die slit for blocking said molten resin from flowing along such end portions of the manifold, each deckle plug being provided on its outer face with a deckle packing (8) to prevent molten resins from flowing between the deckle plug and the manifold wall and having its guide surface straight and and inclined outwardly in the widthwise direction in the die slit as well as in the manifold at an angle of 25° to 37° to the direction of extrusion, the guide surface extending to the point of exit or resin from the slit".

2. A T-die as claimed in claim 1, characterised in that at least one of said deckle plugs (6) is slidable in the manifold and the slit along the widthwise direction of thermoplastic film to be extruded, means (10) being provided for shifting said slidable deckle plug.

### Revendications

1. Filière en T pour l'extrusion d'une pellicule thermoplastique, ladite filière comprenant : un corps principal (3) ; un collecteur (2) défini dans ledit corps et s'étendant dans le sens de la largeur de la pellicule à extruder; une fente (5) de filière s'étendant aussi dans le sens de la largeur de la pellicule et communiquant avec le collecteur (2) de façon que la résine fondue envoyée dans le collecteur soit refoulée à travers la fente (5) de la filière ; et des pièces d'obstruction et de guidage (6) installées chacune dans les parties terminales correspon-

5

dantes du collecteur et possédant chacune à son extrémité interne une surface de guidage (7) pour guider la résine fondue de façon que cette dernière ait une composante d'écoulement vers l'extérieur dans le sens de la largeur lorsqu'elle coule dans le collecteur jusqu'à ladite fente de filière, caractérisée en ce que chaque pièce d'obstruction et de guidage (6) s'étend jusque dans la fente (5) de la filière et a une forme en coupe transversale qui correspond sensiblement à celle du collecteur (2) et de la fente (5) de façon à s'ajuster dans le collecteur et la fente de filière pour empêcher la résine fondue de couler le long de ces parties terminales du collecteur, chaque pièce d'obstruction et de guidage étant pourvue sur sa face extérieure d'une garniture (8) pour empêcher les résines fondues de couler entre la pièce d'obstruction et de guidage et la paroi du collecteur, et la surface de guidage de chaque pièce d'obstruction et de guidage étant rectiligne et inclinée vers l'extérieur dans le sens de la largeur dans la fente de la filière ainsi que dans le collecteur suivant un angle de 25° à 37° par rapport à la direction d'extrusion, la surface de guidage s'étendant jusqu'au point où la résine sort de la fente.

2. Filière en T selon la revendication 1, caractérisée en ce qu'au moins une des pièces d'obstruction et de guidage (6) peut coulisser dans le collecteur et la fente dans le sens de la largeur de la pellicule thermoplastique à extruder, un moyen (10) étant prévu pour déplacer ladite pièce d'obstruction et de guidage coulissante.

## Ansprüche

1. T-Düse zum Extrudieren thermoplastischer Folien, bestehend aus einem Hauptkörper (3), einem Verteiler (2), der in dem Körper begrenzt ist und sich in Querrichtung der zu extrudierenden Folie erstreckt, einem Düsenschlitz (5), der sich ebenfalls in Querrichtung der Folie erstreckt und der mit dem Verteiler (2) in Verbindung steht, so daß ein dem Verteiler zugeführter geschmolzener Kunststoff durch den Schlitz (5) ausgestoßen wird, und Deckelpfropfen (6), die jeweils in die entsprechenden Endbereiche des Verteilers eingesetzt sind und an ihrem Ende eine Führungsfläche (7) zum Führen des geschmolzenen Kunststoffes aufweisen, so daß der Kunststoff eine in Querrichtung nach außen gerichtete Strömungskomponente hat, wenn er im Verteiler zu dem Düsenschlitz fließt, dadurch gekennzeichenet, daß sich jeder Deckelpfropfen (6) in den Düsenschlitz (5) hinein erstreckt mit einem Querschnitt, der im wesentlichen demjenigen des Verteilers (2) und des Schlitzes (5) entspricht, so daß er in den Verteiler und den Düsenschlitz hineinpaßt, um eine Strömung des geschmolzenen Kunststoffes längs dieser Endbereiche des Verteilers zu verhindern, wobei jeder Deckelpfropfen an seiner Außenseite mit einer Deckeldichtung (8) versehen ist, um eine Strömung des geschmolzenen Kunststoffes zwischen dem Deckelpfropfen und der Wand des Verteilers zu verhindern, und wobei jeder Deckelpfropfen eine gerade Führungsfläche aufweist, die in Querrichtung des Düsenschlitzes sowie des Verteilers zur Extrudierrichtung unter einem Winkel von 25 bis 37° nach außen geneigt ist, wobei sich die Führungsfläche zum Austrittspunkt des Kunststoffes aus dem Schlitz erstreckt.

2. T-Düse nach Anspruch 1, dadurch gekennzeichnet, daß mindestens einer der Deckelpfropfen (6) in dem Verteiler und dem Schlitz in Querrichtung der zu extrudierenden Folie verschiebbar ist, wobei Mittel (10) vorgesehen sind, um den verschiebbaren Deckelpfropfen zu verlagern.

FIG. 1

FIG. 2

FIG. 3

FIG. 4

FIG. 5

EP 0 084 450 B2

# FIG. 6

# FIG. 7